# EUROPÄISCHE PATENTANMELDUNG

(11) **EP 3 358 372 A2**
(43) Veröffentlichungstag der Anmeldung: **08.08.2018**
(21) Anmeldenummer: 18150337.6
(22) Anmeldetag: 04.01.2018
(51) Int. Cl.: G01S 19/40, G01S 13/86, G01S 13/89, G01S 13/93

(54) **VERFAHREN ZUR NAVIGATION EINES FAHRZEUGS**

(30) Priorität: 07.02.2017 DE 102017102315
(71) Anmelder: SICK AG, 79183 Waldkirch/Breisgau (DE)
(72) Erfinder: BEINSCHOB, Patric, 22043 Hamburg (DE); KRONAUGE, Matthias, 22761 Hamburg (DE)
(74) Vertreter: Manitz Finsterwald Patentanwälte PartmbB

(57) **Zusammenfassung**

Die Erfindung betrifft ein Verfahren zur Navigation von Fahrzeugen (18), insbesondere von autonom fahrenden Fahrzeugen (18), in einem vorbestimmten Navigationsbereich (10) auf der Grundlage einer topografischen Karte (30) des Navigationsbereichs (10), wobei ein Fahrzeug (18) einen Radarsensor (20) aufweist, mit den Schritten:
- Emittieren von Funkwellen durch den Radarsensor (20) in eine zu überwachende Umgebung (22) des Fahrzeugs (18),
- Erfassen eines gegebenenfalls in der Umgebung (22) vorhandenen Objekts mittels Detektieren von Funkwellen durch den Radarsensor (20), welche von diesem Objekt remittiert wurden,
- Ermitteln von Positionsdaten des erfassten Objekts auf der Grundlage der detektierten Funkwellen,
- Ermitteln einer Geschwindigkeit dieses Objekts auf der Grundlage der detektierten Funkwellen, und
- Erzeugen der topografischen Karte (30) des Navigationsbereichs (10) durch Abspeichern von Positionsdaten von erfassten Objekten, wobei Positionsdaten eines jeweiligen Objekts nur dann abgespeichert werden, wenn festgestellt wurde, dass die Geschwindigkeit dieses Objekts einen vorgegebenen Schwellenwert nicht überschreitet.

Die Erfindung betrifft ferner ein Verfahren zur Navigation von Fahrzeugen (18), insbesondere von autonom fahrenden Fahrzeugen (18), in einem vorbestimmten Navigationsbereich (10) auf der Grundlage einer topografischen Karte (30) des Navigationsbereichs (10), welche Positionsinformationen von im Navigationsbereich (10) vorhandenen stationären Objekten umfasst, wobei ein Fahrzeug (18) einen Radarsensor (20) aufweist,
mit den Schritten:
- Emittieren von Funkwellen durch den Radarsensor (20) in eine zu überwachende Umgebung des Fahrzeugs (18),
- Erfassen eines gegebenenfalls in der Umgebung vorhandenen Objekts mittels Detektieren von Funkwellen durch den Radarsensor (20), welche von diesem Objekt remittiert wurden,
- Ermitteln von Positionsdaten des erfassten Objekts auf der Grundlage der detektierten Funkwellen,
- Ermitteln einer Geschwindigkeit dieses Objekts auf der Grundlage der detektierten Funkwellen, und
- Ermitteln der Fahrzeugposition auf der Grundlage eines Vergleichs von Positionsdaten von erfassten Objekten mit den in der topografischen Karte (30) abgespeicherten Positionsinformationen von Objekten, wobei nur Positionsdaten derjenigen erfassten Objekte in den Vergleich mit einbezogen werden, deren Geschwindigkeit einen vorgegebenen Schwellenwert nicht überschreitet.

## Beschreibung

Die vorliegende Erfindung betrifft Verfahren zur Navigation von Fahrzeugen, insbesondere von autonom fahrenden Fahrzeugen oder fahrerlosen Transportfahrzeugen, in einem vorbestimmten Navigationsbereich auf der Grundlage einer topografischen Karte des Navigationsbereichs.

Unter einem Navigationsbereich wird ein räumlicher Bereich verstanden, in dem sich ein zu navigierende Fahrzeug bewegen soll. Der Navigationsbereich kann sich sowohl innerhalb als auch außerhalb von Gebäuden befinden. Beispielsweise kann der Navigationsbereich sich über Fertigungshallen, Lagerhallen, Lagerflächen und/oder sonstige Außenflächen erstrecken. Der Navigationsbereich kann insbesondere aber auch öffentliche und/oder nicht öffentliche Straßen, Wege, Plätze oder dergleichen umfassen.

Die Navigation erfolgt in an sich bekannter Weise mit Hilfe von Computersystemen, die beispielsweise im Fahrzeug vorhanden sind oder mit dem Fahrzeug über eine geeignete Kommunikationsverbindung kommunizieren können, wobei ein derartiges Computersystem einerseits mit einem oder mehreren Sensoren zur Positionsbestimmung des Fahrzeugs verbunden sein kann und andererseits mit entsprechenden Antriebs- und Lenksystemen des Fahrzeugs kommunizieren kann, um das Fahrzeug entlang einer vorbestimmten und/oder berechneten Route durch den Navigationsbereich zu steuern.

Als Sensoren zur Positionsbestimmung werden bei bekannten Navigationsverfahren beispielsweise Laserscanner verwendet, die an dem zu navigierenden Fahrzeug angeordnet sind. Mit Hilfe derartiger Laserscanner können die Richtung und der Abstand von Objekten im Navigationsbereich bezogen auf die Position des Fahrzeugs ermittelt werden, wobei es sich bei den Objekten einerseits um ortsfeste Objekte wie zum Beispiel Wände, Pfeiler, Maschinen, Regale oder Zäune und andererseits um bewegliche Objekte wie beispielsweise andere Fahrzeuge, Personen oder vorübergehend abgestellte Gegenstände handeln kann.

Um ein Fahrzeug innerhalb des Navigationsbereichs navigieren zu können, ist es erforderlich, dass eine topografische Karte des Navigationsbereichs zur Verfügung steht, in welcher die ortsfesten Objekte und insbesondere auch die Grenzen des Navigationsbereichs verzeichnet sind. Eine solche topografische Karte kann manuell oder automatisiert auf der Grundlage von Plänen erzeugt werden, aber auch durch das Navigationssystem des Fahrzeugs selbst, indem das Fahrzeug oder durch den gesamten Navigationsbereich bewegt wird und dieser dabei durch am Fahrzeug angeordnete Sensoren vermessen wird. Die topografische Karte kann Positionsdaten, insbesondere Konturen, der im Navigationsbereich vorhandenen Objekte umfassen, wobei im nachfolgenden Regelbetrieb eine Lokalisierung oder Positionsbestimmung des Fahrzeugs auf der Grundlage dieser in der Karte gespeicherten Positionsdaten und/oder Konturen erfolgt.

Es ist bekannt, die Position eines Fahrzeugs mit Hilfe von sogenannten Landmarken zu bestimmen. Dabei kann es sich um Reflektoren handeln, die an bekannten Positionen im Navigationsbereich angeordnet sind, und die dann vom Laserscanner erfasst werden. Mit Hilfe von durch den Laserscanner ermittelten Relativpositionen der Landmarken kann dann die Position des Fahrzeugs bestimmt werden. Ein derartiger Laserscanner für die Navigation eines Fahrzeugs ist in DE 10 2013 104 239 B3 beschrieben.

Ferner ist in DE 11 2011 104 644 T5 ein Robotersystem mit einem mobilen Roboter offenbart, bei dem ein Sensorsystem mit verschiedenen Arten von Sensoren zur Überwachung der Umwelt des Roboters vorgesehen ist.

Laserscanner sind aufgrund ihres komplexen Aufbaus mit mechanisch rotierenden Teilen relativ teuer in der Anschaffung und unterliegen einem nicht unerheblichen Verschleiß. Zudem sind Laserscanner relativ empfindlich gegenüber Umwelteinflüssen wie Schmutz, Regen, Nebel oder Rauch, welche die Detektion von Objekten beeinträchtigen. Bewegliche Objekte wie andere Fahrzeuge oder Personen im Navigationsbereich können sowohl das Erzeugen der topografischen Karte oder Kartografierung als auch die Positionsbestimmung oder Lokalisierung des Fahrzeugs im Navigationsbereich beeinträchtigen.

Um die Erfassung von beweglichen Objekten möglichst zu vermeiden, werden die Laserscanner zur Verbesserung der Erfassungsperspektive oftmals auf hohen, am Fahrzeug vorgesehenen Masten angeordnet. Diese Konfiguration führt jedoch häufig zu unerwünschten Schwingungen oder Schwenkbewegungen, die sowohl die Kartografierung als auch die Lokalisierung hinsichtlich ihrer Präzision stark beeinträchtigen können.

Es ist die Aufgabe der Erfindung, Verfahren zur Navigation eines Fahrzeugs der eingangs genannten Art anzugeben, bei denen auf kostengünstige Weise eine zuverlässige und präzise Erzeugung der topografischen Karte und/oder eine Ermittlung der Fahrzeugposition gewährleistet ist.

Die Lösung der Aufgabe erfolgt durch ein Verfahren mit den Merkmalen des Anspruchs 1 und durch ein Verfahren mit den Merkmalen des Anspruchs 4.

Ein erfindungsgemäßes Verfahren zur Navigation eines Fahrzeugs, insbesondere eines autonom fahrenden Fahrzeugs in einem vorbestimmten Navigationsbereich auf der Grundlage einer topografischen Karte des Navigationsbereichs, sieht vor, dass das Fahrzeug einen Radarsensor aufweist, und umfasst die Schritte:
- Emittieren von Funkwellen durch den Radarsensor in eine zu überwachende Umgebung des Fahrzeugs,
- Erfassen eines gegebenenfalls in der Umgebung vorhandenen Objekts mittels Detektieren von Funkwellen durch den Radarsensor, welche von diesem Objekt remittiert wurde,
- Ermitteln von Positionsdaten des erfassten Objekts auf der Grundlage der detektierten Funkwellen,
- Ermitteln einer Geschwindigkeit dieses Objekts auf der Grundlage der detektierten Funkwellen, und
- Erzeugen der topografischen Karte des Navigationsbereichs durch Abspeichern von Positionsdaten von erfassten Objekten, wobei Positionsdaten eines jeweiligen Objekts nur dann abgespeichert werden, wenn festgestellt wurde, dass die Geschwindigkeit dieses Objekts einen vorgegebenen Schwellenwert nicht überschreitet.

Der Radarsensor umfasst insbesondere einen Radarsender zur Emission von Funkwellen und einen Radarempfänger zur Detektion der remittierten Funkwellen, wobei im Folgenden unter remittierten Funkwellen allgemein diejenigen Funkwellen verstanden werden, die von einem Objekt gerichtet oder ungerichtet remittiert und/oder spiegelnd reflektiert werden. Positionsdaten können insbesondere eine Relativposition eines jeweiligen erfassten Objekts in Bezug auf das Fahrzeug, insbesondere eine Richtung und einen Abstand, umfassen, wobei insbesondere auch Informationen über eine Kontur des Objekts oder einer Objektgruppe, beispielsweise bei ausgedehnten Objekten oder mehreren unmittelbar benachbarten Objekten, umfasst sein können.

Die Verwendung eines Radarsensors zur Objekterfassung bietet den Vorteil, dass nicht nur die Position des Objekts ermittelt werden kann, sondern zugleich auch dessen Geschwindigkeit. Somit kann sichergestellt werden, dass nur stationäre Objekte kartografiert werden, d.h. deren Positionsdaten in der Karte abgespeichert werden. Bewegliche Objekte wie Fußgänger oder andere Fahrzeuge, die sich mit einer bestimmten Geschwindigkeit durch den Navigationsbereich bewegen, werden nicht kartografiert.

Im einfachsten Fall beträgt der Schwellenwert Null. Zweckmäßigerweise wird der Schwellenwert jedoch nicht exakt gleich Null gesetzt, um z.B. sicherzustellen, dass keine Objekte von der Kartografierung ausgeschlossen werden, bei denen eine von Null abweichende Geschwindigkeit alleine aufgrund von Messfehlern ermittelt wurde.

Um eine vollständige Kartografierung des Navigationsbereichs zu erreichen, wird das Fahrzeug zweckmäßigerweise einmal oder mehrmals, insbesondere auf unterschiedlichen Pfaden, durch den gesamten Navigationsbereich bewegt, so dass nach und nach alle dort vorhandenen Objekte zumindest einmal von dem Radarsensor erfasst werden.

Vorteilhafterweise umfasst das erfindungsgemäße Verfahren ferner das Steuern des Fahrzeugs bzw. weiterer Fahrzeuge auf der Grundlage der erzeugten topografischen Karte.

Insbesondere kann das Navigieren auf der Grundlage sogenannter SLAM-Algorithmen (von englisch Simultaneous Localization and Mapping; deutsch Simultane Lokalisierung und Kartenerstellung) erfolgen, worunter Algorithmen verstanden werden, bei denen ein mobiles System gleichzeitig eine Karte seiner Umgebung erstellt und seine Position und Ausrichtung innerhalb dieser Karte schätzt.

Gemäß einer vorteilhaften Ausgestaltung des Verfahrens repräsentieren die Positionsdaten eines jeweiligen Objekts eine Relativposition des Objekts in Bezug auf das Fahrzeug, wobei ferner eine zu den Positionsdaten korrespondierende Fahrzeugposition im Navigationsbereich ermittelt wird, und die abgespeicherten Positionsdaten auf der Grundlage der Relativposition des Objekts und der Fahrzeugposition erzeugt werden. Die Fahrzeugposition kann beispielsweise durch Mitkoppeln des Fahrwegs des Fahrzeugs ausgehend von einer bekannten Startposition ermittelt werden, beispielsweise mit Hilfe von Radsensoren, Wegstreckensensoren, Drehratensensoren und/oder Kompassen. Auch zusätzliche Sensoren, beispielsweise optische Sensoren, mit deren Hilfe eine Triangulation durchgeführt werden kann, können zur Bestimmung der Fahrzeugposition herangezogen werden.

Die abgespeicherten Positionsdaten können bei einer einfachen und günstigen Ausgestaltung die auf Grundlage der Funkwellen ermittelten Positionsdaten umfassen. Grundsätzlich ist es aber auch möglich, dass die abgespeicherten Positionsdaten auf andere Weise ermittelt wurden, z.B. durch einen zusätzlichen Überwachungssensor.

Vorteilhafterweise ist vorgesehen, dass das Fahrzeug ferner einen optischen Überwachungssensor, insbesondere einen Laserscanner aufweist, welcher Lichtwellen in die zu überwachende Umgebung des Fahrzeugs emittiert und Lichtwellen detektiert, welche von den gegebenenfalls in der Umgebung vorhandenen Objekt remittiert wurde, dass zusätzliche Positionsdaten des Objekts auf der Grundlage der detektierten Lichtwellen ermittelt werden, und dass das Erzeugen der topografischen Karte des Navigationsbereichs umfasst, dass anstelle der oder zusätzlich zu den von dem Radarsensor ermittelten Positionsdaten des erfassten Objekts die von dem optischen Überwachungssensor ermittelten zusätzlichen Positionsdaten dieses Objekts abgespeichert werden.

Bei dieser Ausgestaltung erfassen der Radarsensor und der optische Überwachungssensor, insbesondere Laserscanner, jeweils dasselbe Objekt. Die zur Kartografierung herangezogenen Positionsdaten eines bestimmten Objekts werden durch den optischen Überwachungssensor bereitgestellt oder ergänzt, während von dem Radarsensor lediglich oder zumindest die ermittelte Geschwindigkeit des Objekts berücksichtigt wird. Die tatsächlich abgespeicherten Positionsdaten müssen also nicht notwendigerweise die auf Grundlage der Funkwellen ermittelten Positionsdaten umfassen, obwohl dies eine einfache und günstige Lösung darstellt. Da mit optischen Überwachungssensoren unter Umständen eine höhere Ortsauflösung bei der Positionsbestimmung als mit Radarsensoren erzielt werden kann, kann die topografische Karte bei Verwendung von auf Grundlage der Lichtwellen eines zusätzlichen optischen Überwachungssensors ermittelten Positionsdaten mit einer höheren Genauigkeit erzeugt werden, wobei in dem Fall die dabei verursachten höheren Kosten in Kauf genommen werden können. So kann beispielsweise nur ein Referenzfahrzeug, welches ausschließlich für die Erzeugung der topografischen Karte eingesetzt wird, einen derartigen optischen Überwachungssensor aufweisen. Für das eigentliche Steuern oder Navigieren im Navigationsbereich ist eine solche Doppelausstattung nicht zwingend erforderlich.

Die Aufgabe der Erfindung wird ferner durch ein Verfahren zur Navigation eines Fahrzeugs, insbesondere eines autonom fahrenden Fahrzeugs, in einem vorbestimmten Navigationsbereich auf der Grundlage einer topografischen Karte des Navigationsbereichs gelöst, welche Informationen von im Navigationsbereich vorhandenen stationären Objekten umfasst, wobei das Fahrzeug einen Radarsensor aufweist, und wobei das Verfahren die Schritte umfasst:
- Emittieren von Funkwellen durch den Radarsensor in eine zu überwachende Umgebung des Fahrzeugs,
- Erfassen eines gegebenenfalls in der Umgebung vorhandenen Objekts mittels Detektieren von Funkwellen durch den Radarsensor, welche von diesem Objekt remittiert wurden,
- Ermitteln von Positionsdaten des erfassten Objekts auf der Grundlage der detektierten Funkwellen,
- Ermitteln einer Geschwindigkeit dieses Objekts auf der Grundlage der detektierten Funkwellen, und
- Ermitteln der Fahrzeugposition auf der Grundlage eines Vergleichs von Positionsdaten von erfassten Objekten mit den in der topografischen Karte abgespeicherten Positionsinformationen von Objekten, wobei nur Positionsdaten derjenigen erfassten Objekte in den Vergleich mit einbezogen werden, deren Geschwindigkeit einen vorgegebenen Schwellenwert nicht überschreitet.

Bei dieser Ausgestaltung werden ebenfalls die Vorteile genutzt, die sich aus der durch den Radarsensor ermöglichten Messung der Geschwindigkeit von erfassten Objekten ergibt. Da die Ermittlung der Fahrzeugposition auf der Grundlage eines Vergleichs der Positionsdaten von erfassten Objekten mit den in der topografischen Karte abgespeicherten Positionsinformationen erfolgt, können bewegliche Objekte wie andere Fahrzeuge oder Personen, die nicht in der topografischen Karte abgespeichert sind, den Vergleich und die daraus resultierende Ermittlung der Fahrzeugposition erschweren, zeitlich verzögern oder sogar unmöglich machen. Durch das Ausschließen von beweglichen Objekten von diesem Vergleich wird die Genauigkeit bei der Lokalisierung oder Positionsbestimmung des zu navigierenden Fahrzeugs verbessert und insbesondere auch fehlerhafte Lokalisierungen oder Positionsbestimmungen weitgehend vermieden. Der Begriff "Fahrzeugposition" bezieht sich nicht nur auf den Ort des Fahrzeugs im Navigationsbereich, sondern kann ggf. auch die Ausrichtung des Fahrzeugs im Navigationsbereich umfassen.

Vorteilhafterweise wurde die für das Ermitteln der Fahrzeugposition verwendete topografische Karte gemäß dem oben zuerst beschriebenen Verfahren nach Anspruch 1 oder einer seiner vorteilhaften Ausgestaltungen erzeugt. Dadurch wird die Genauigkeit bei dem Ermitteln der Fahrzeugposition nochmals verbessert, da für den genannten Vergleich besonders präzise und weitgehend fehlerfreie Positionsinformationen zur Verfügung stehen.

Insbesondere können das Erzeugen der topografischen Karte und das Ermitteln der Fahrzeugposition weitgehend simultan gemäß einem SLAM-Verfahren oder SLAM-Algorithmus erfolgen.

Vorteilhafterweise umfasst der Vergleich von Positionsdaten von erfassten Objekten mit den in der topografischen Karte abgespeicherten Positionsinformationen von Objekten, dass Positionsdaten von mehreren erfassten Objekten zu einem Erfassungsmuster zusammengefasst werden, und dass aus den in der topografischen Karte abgespeicherten Positionsinformationen dasjenige Konturmuster ermittelt wird, welches dem Erfassungsmuster entspricht. Es wird also auf der Grundlage der detektierten Funkwellen eine Objektkontur ermittelt und die topografische Karte darauf untersucht, an welcher Position dort eine ähnliche oder identische Kontur vorliegt. Hierbei muss das genannte Erfassungsmuster nicht exakt dem in der topografischen Karte vorhandenen Konturmuster entsprechen, sondern lediglich eine bestimmte Ähnlichkeit aufweisen. Hierbei können an sich bekannte Verfahren, insbesondere auch iterative Verfahren, zur Mustererkennung und insbesondere auch SLAM-Verfahren zur Anwendung gelangen. Insbesondere können auch perspektivische Verzerrungen, die sich aus unterschiedlichen Blickwinkeln auf ein Objekt ergeben, berücksichtigt werden.

Die für den Vergleich verwendeten Positionsdaten können bei einer einfachen und günstigen Ausgestaltung die auf Grundlage der Funkwellen ermittelten Positionsdaten umfassen. Grundsätzlich ist es aber auch möglich, dass die für den Vergleich verwendeten Positionsdaten auf andere Weise ermittelt wurden, z.B. durch einen zusätzlichen Überwachungssensor.

Vorteilhafterweise ist vorgesehen, dass das Fahrzeug ferner einen optischen Überwachungssensor, insbesondere einen Laserscanner aufweist, welcher Lichtwellen in die zu überwachende Umgebung des Fahrzeugs emittiert und Lichtwellen detektiert, welche von den gegebenenfalls in der Umgebung vorhandenen Objekt remittiert wurde, dass zusätzliche Positionsdaten des Objekts auf der Grundlage der detektierten Lichtwellen ermittelt werden, und dass das Ermitteln der Fahrzeugposition auf der Grundlage des Vergleichs von Positionsdaten von erfassten Objekten mit den in der topografischen Karte abgespeicherten Positionsinformationen von Objekten umfasst, dass anstelle der oder zusätzlich zu den von dem Radarsensor ermittelten Positionsdaten des erfassten Objekts die von dem optischen Überwachungssensor ermittelten zusätzlichen Positionsdaten dieses Objekts in dem Vergleich verwendet werden.

Bei dieser Ausgestaltung erfassen der Radarsensor und der optische Überwachungssensor, insbesondere Laserscanner, jeweils dasselbe Objekt. Entsprechend der oben beschriebenen analogen Ausgestaltung bei der Kartografierung werden auch bei der Bestimmung der Fahrzeugposition die hierfür herangezogenen Positionsdaten eines bestimmten Objekts durch den optischen Überwachungssensor bereitgestellt oder ergänzt, während der Radarsensor lediglich oder zumindest die ermittelte Geschwindigkeit des Objekts berücksichtigt wird. Da mit optischen Überwachungssensoren unter Umständen eine höhere Ortsauflösung bei der Positionsbestimmung als mit Radarsensoren erzielt werden kann, kann die Fahrzeugposition mit einer höheren Genauigkeit ermittelt werden.

Gemäß einer weiteren vorteilhaften Ausgestaltung der vorstehend erläuterten Verfahren können der Radarsensor und/oder der optische Überwachungssensor für eine Ermittlung des Abstands zu dem erfassten Objekt ausgelegt sein.

Vorteilhafterweise ist der Radarsensor ein Dauerstrichradarsensor, insbesondere ein modulierter Dauerstrichradarsensor. Beispielsweise kann es sich bei dem Dauerstrichradarsensor um einen frequenzmodulierten Dauerstrichradarsensor (FMCW-Radarsensor; von engl. *frequency modulated continuous wave radar*), aber auch um einen phasencodierten oder rauschmodulierten Dauerstrichradarsensor handeln.

Eine vorteilhafte Ausgestaltung der vorstehend genannten Verfahren zeichnet sich dadurch aus, dass die ermittelte Geschwindigkeit des Objekts eine Relativgeschwindigkeit des Objekts in Bezug auf das Fahrzeug ist, dass ferner die Eigengeschwindigkeit des Fahrzeugs ermittelt wird, dass auf der Grundlage der Relativgeschwindigkeit und der Eigengeschwindigkeit eine Absolutgeschwindigkeit des Objekts ermittelt wird, und dass für das Feststellen, ob die Geschwindigkeit des Objekts einen vorgegebenen Schwellenwert nicht überschreitet, die Absolutgeschwindigkeit des Objekts betrachtet wird. Dadurch wird vermieden, dass solche Objekte kartografiert bzw. bei der Ermittlung der Fahrzeugposition berücksichtigt werden, deren Geschwindigkeit nur scheinbar den genannten Geschwindigkeitsschwellenwert nicht überschreitet, etwa weil sie sich mit der gleichen Geschwindigkeit und in die gleiche Richtung bewegen wie das Fahrzeug und der Radarsensor deshalb für die Objekte eine Geschwindigkeit von Null misst. Vorteilhafterweise erfolgt hierbei die Ermittlung der Objektgeschwindigkeit und/oder der Fahrzeuggeschwindigkeit als vektorielle Geschwindigkeit, d.h. nicht nur der Betrag, sondern auch die Richtung der Objekt- bzw. Fahrzeugbewegung wird berücksichtigt. Die Eigengeschwindigkeit des Fahrzeugs kann beispielsweise mit Hilfe von Radsensoren, Tachometern, Drehratensensoren und/oder Kompassen ermittelt werden.

Grundsätzlich kann jedoch auch beim Erzeugen der topografischen Karte und/oder beim Ermitteln der Fahrzeugposition die Relativgeschwindigkeit zwischen dem erfassten Objekt und dem Fahrzeug herangezogen werden, wenn die Eigengeschwindigkeit des Fahrzeugs klein ist und daher vernachlässigt und/oder bei der Festsetzung des Schwellenwerts berücksichtigt werden kann.

Prinzipiell müssen das Fahrzeug, welches für das Erzeugen der topografischen Karte eingesetzt wird, und das Fahrzeug, für welches die Fahrzeugposition ermittelt wird und welches daher im engeren Sinne navigiert wird, nicht zwingend identisch sein. So kann insbesondere die von einem Fahrzeug erzeugte topografische Karte in oder mehrere andere Fahrzeuge übertragen werden, die in dem gleichen Navigationsbereich eingesetzt werden sollen.

Weitere vorteilhafte Ausgestaltungen der erfindungsgemäßen Verfahren ergeben sich aus den Unteransprüchen, der Zeichnung und der Beschreibung.

Die Erfindung wird nachfolgend anhand von Ausführungsbeispielen mit Bezug auf die Zeichnung beschrieben. Es zeigen:
- Fig. 1: eine schematische Darstellung eines vorbestimmten Naviga-tionsbereichs, von dem gemäß den erfindungsgemäßen Verfahren eine topografische Karte erzeugt werden soll bzw. in dem ein Fahrzeug navigiert werden soll, und
- Fig. 2: eine durch das erfindungsgemäße Verfahren erzeugte topografische Karte des Navigationsbereichs von Fig. 1.

Nachfolgend werden die erfindungsgemäßen Verfahren exemplarisch anhand eines Ausführungsbeispiels erläutert, wobei zunächst die mit dem Erzeugen der topografischen Karte in Zusammenhang stehenden Verfahrensschritte näher erläutert werden.

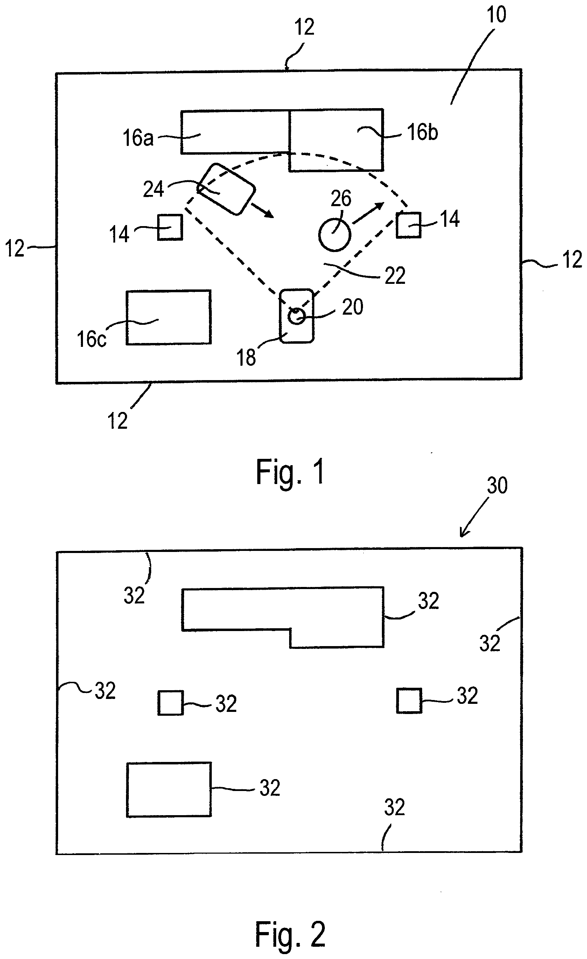

Fig. 1 zeigt einen vorbestimmten Navigationsbereich 10, in dem ein Fahrzeug 18, beispielsweise ein autonom fahrendes Fahrzeug oder fahrerloses Transportfahrzeug, navigiert oder gesteuert werden soll. Bei dem beispielhaften, im Ausführungsbeispiel rechteckigen Navigationsbereich 10 kann es sich beispielsweise um eine Lagerhalle handeln, welche allseitig von Wänden 12 begrenzt ist. Etwaige Türen oder Zugänge sind nicht dargestellt. Im Navigationsbereich 10 befinden sich zwei Pfeiler 14 sowie mehrere Regale 16a bis 16c, welche zusammenfassend auch als stationäre Objekte bezeichnet werden.

Ferner befinden sich im Navigationsbereich 10 ein Fremdfahrzeug 24 und eine Person 26, welche sich in durch entsprechende Pfeile angedeutete Richtungen bewegen.

Das Fahrzeug 18, welches beispielsweise Transportaufgaben in dem Navigationsbereich 10 erfüllen soll, erzeugt zweckmäßigerweise zunächst eine topografische Karte 30 (Fig. 2) des Navigationsbereichs 10. Zu diesem Zweck weist das Fahrzeug einen Radarsensor 20 auf, welcher Funkwellen in eine zu überwachende Umgebung 22 des Fahrzeugs 18 emittiert, und Funkwellen detektiert, die von einem gegebenenfalls in der Umgebung 22 vorhandenen Objekt remittiert wurden. Der Radarsensor 20 ist als geschwindigkeitsmessender Radarsensor, beispielsweise als ein frequenzmodulierter Dauerstrichradarsensor (FMCW-Radarsensor) ausgestaltet,

Für die erfassten Objekte werden jeweilige Positionsdaten und Geschwindigkeiten ermittelt. Die Positionsdaten werden nach und nach in der topografische Karte 30 (Fig. 2) abgespeichert, wobei nur die Positionsdaten für diejenigen Objekte abgespeichert werden, deren Geschwindigkeit einen vorgegebenen Schwellenwert nicht überschreitet, wobei dieser Schwellenwert vorzugsweise eine Geschwindigkeit von Null oder nahe Null repräsentiert.

Die Differenzierung anhand der Geschwindigkeit hat also zur Folge, dass lediglich die Positionsdaten der stationären Objekte abgespeichert werden, welche im vorliegenden Beispiel die Wände 12, die Pfeiler 14 und die Regale 16a - 16c sind. Da die Regale 16a, 16b unmittelbar nebeneinander stehen, werden diese in der topografischen Karte 30 als ein einziges Konturmuster 32 repräsentiert. Die Positionsdaten des Fremdfahrzeugs 24 und der Person 26 werden nicht abgespeichert, da es sich hierbei um bewegliche Objekte handelt. Entsprechend sind in der topografischen Karte 30 nur die Konturmuster 32 der stationären Objekte wiedergegeben.

Nachfolgend wird das korrespondierende Verfahren zum Steuern oder Navigieren eines Fahrzeugs unter Verwendung einer topografischen Karte des Navigationsbereichs 10 erläutert. Vereinfachend wird angenommen, dass die in Fig. 1 dargestellte Szene nun eine Szene darstellt, die beim Navigieren des Fahrzeugs 18 auftritt. Das Verfahren zum Steuern oder Navigieren wird bei der hier beschriebenen Verfahrensführung basierend auf der topografischen Karte 30 durchgeführt, die gemäß den vorstehend erläuterten Verfahrensschritten zur Kartografierung erzeugt wurde. Grundsätzlich kann eine Karte für das Verfahren zum Steuern oder Navigieren eines Fahrzeugs in dem Navigationsbereich auch auf andere Weise erzeugt worden sein.

Mit Hilfe des Radarsensors 20 werden wiederum in der zu überwachenden Umgebung 22 des Fahrzeugs vorhandene Objekte erfasst und deren Positionsdaten und Geschwindigkeit ermittelt. Durch einen Vergleich der Positionsdaten der erfassten Objekte mit den in der topografischen Karte 30 abgespeicherten Positionsinformationen von stationären Objekten im Navigationsbereich 10, welche durch die Konturmuster 32 repräsentiert werden, kann die Position des Fahrzeugs 18 im Navigationsbereich 10 ermittelt werden.

Aufgrund der Geschwindigkeitsermittlung ist es wiederum möglich, das Fremdfahrzeug 24 und die Person 26 als bewegliche Objekte zu identifizieren. Hierfür wird die durch den Radarsensor 20 ermittelte Relativ- oder Absolutgeschwindigkeit der beweglichen Objekte 24, 26 mit einem vorgegebenen Schwellenwert verglichen. Sofern die Geschwindigkeit nicht über dem vorgegebenen Schwellenwert liegt, werden diese beweglichen Objekte 24, 26 also nicht berücksichtigt und insbesondere wird auch nicht versucht, in der topografischen Karte 30 Konturmuster zu identifizieren, welche den beweglichen Objekten 24, 26 entsprechen.

Dadurch kann die Positionsbestimmung für das Fahrzeug 18 schneller und vor allem weniger fehleranfällig erfolgen. Insbesondere können solche Fälle ausgeschlossen werden, dass ein Erfassungsmuster, welches auch Positionsdaten von beweglichen Objekten enthält, eine zufällige Ähnlichkeit mit einem in der topografischen Karte 30 abgespeicherten Konturmuster 32 aufweist, was unter Umständen zu einer fehlerhaften Ermittlung der Fahrzeugposition führen könnte, die eine Fehlnavigation und unter Umständen sogar Kollisionen zur Folge hätte.

### Bezugszeichenliste

- 10: Navigationsbereich
- 12: Wand
- 14: Pfeiler
- 16a - 16c: Regal
- 18: Fahrzeug
- 20: Radarsensor
- 22: Umgebung
- 24: Fremdfahrzeug
- 26: Person
- 30: topografische Karte
- 32: Konturmuster

## Patentansprüche

1. Verfahren zur Navigation von Fahrzeugen (18), insbesondere von autonom fahrenden Fahrzeugen (18), in einem vorbestimmten Navigationsbereich (10) auf der Grundlage einer topografischen Karte (30) des Navigationsbereichs (10), wobei ein Fahrzeug (18) einen Radarsensor (20) aufweist, mit den Schritten:
- Emittieren von Funkwellen durch den Radarsensor (20) in eine zu überwachende Umgebung (22) des Fahrzeugs (18),
- Erfassen eines gegebenenfalls in der Umgebung (22) vorhandenen Objekts mittels Detektieren von Funkwellen durch den Radarsensor (20), welche von diesem Objekt remittiert wurden,
- Ermitteln von Positionsdaten des erfassten Objekts auf der Grundlage der detektierten Funkwellen,
- Ermitteln einer Geschwindigkeit dieses Objekts auf der Grundlage der detektierten Funkwellen, und
- Erzeugen der topografischen Karte (30) des Navigationsbereichs (10) durch Abspeichern von Positionsdaten von erfassten Objekten, wobei Positionsdaten eines jeweiligen Objekts nur dann abgespeichert werden, wenn festgestellt wurde, dass die Geschwindigkeit dieses Objekts einen vorgegebenen Schwellenwert nicht überschreitet.

2. Verfahren nach Anspruch 1,
**dadurch gekennzeichnet,**
**dass** die Positionsdaten eines jeweiligen Objekts eine Relativposition des Objekts in Bezug auf das Fahrzeug (18) repräsentieren,
**dass** ferner eine zu den Positionsdaten korrespondierende Fahrzeugposition im Navigationsbereich (10) ermittelt wird, und
**dass** die abgespeicherten Positionsdaten auf der Grundlage der Relativposition des Objekts und der Fahrzeugposition erzeugt werden.

3. Verfahren nach einem der vorhergehenden Ansprüche,
**dadurch gekennzeichnet,**
**dass** das Fahrzeug (18) ferner einen optischen Überwachungssensor, insbesondere einen Laserscanner, aufweist, welcher Lichtwellen in die zu überwachende Umgebung des Fahrzeugs (18) emittiert und Lichtwellen detektiert, welche von dem gegebenenfalls in der Umgebung vorhandenen Objekt remittiert wurden,
**dass** zusätzliche Positionsdaten des Objekts auf der Grundlage der detektierten Lichtwellen ermittelt werden, und
**dass** das Erzeugen der topografischen Karte (30) des Navigationsbereichs (10) umfasst, dass anstelle der oder zusätzlich zu den von dem Radarsensor (20) ermittelten Positionsdaten des erfassten Objekts die von dem optischen Überwachungssensor ermittelten zusätzlichen Positionsdaten dieses Objekts abgespeichert werden.

4. Verfahren zur Navigation von Fahrzeugen (18), insbesondere von autonom fahrenden Fahrzeugen (18), in einem vorbestimmten Navigationsbereich (10) auf der Grundlage einer topografischen Karte (30) des Navigationsbereichs (10), welche Positionsinformationen von im Navigationsbereich (10) vorhandenen stationären Objekten umfasst, wobei ein Fahrzeug (18) einen Radarsensor (20) aufweist,
mit den Schritten:
- Emittieren von Funkwellen durch den Radarsensor (20) in eine zu überwachende Umgebung des Fahrzeugs (18),
- Erfassen eines gegebenenfalls in der Umgebung vorhandenen Objekts mittels Detektieren von Funkwellen durch den Radarsensor (20), welche von diesem Objekt remittiert wurden,
- Ermitteln von Positionsdaten des erfassten Objekts auf der Grundlage der detektierten Funkwellen,
- Ermitteln einer Geschwindigkeit dieses Objekts auf der Grundlage der detektierten Funkwellen, und
- Ermitteln der Fahrzeugposition auf der Grundlage eines Vergleichs von Positionsdaten von erfassten Objekten mit den in der topografischen Karte (30) abgespeicherten Positionsinformationen von Objekten, wobei nur Positionsdaten derjenigen erfassten Objekte in den Vergleich mit einbezogen werden, deren Geschwindigkeit einen vorgegebenen Schwellenwert nicht überschreitet.

5. Verfahren nach Anspruch 4,
**dadurch gekennzeichnet,**
die topografische Karte (30) nach dem Verfahren gemäß einem der Ansprüche 1 bis 3 erzeugt wurde.

6. Verfahren nach Anspruch 4 oder 5,
**dadurch gekennzeichnet,**
**dass** der Vergleich von Positionsdaten von erfassten Objekten mit den in der topografischen Karte (30) abgespeicherten Positionsinformationen von Objekten umfasst, dass Positionsdaten von mehreren erfassten Objekten zu einem Erfassungsmuster zusammengefasst werden, und dass aus den in der topografischen Karte (30) abgespeicherten Positionsinformationen dasjenige Konturmuster (32) ermittelt wird, welches dem Erfassungsmuster entspricht.

7. Verfahren nach einem der Ansprüche 4 bis 6,
**dadurch gekennzeichnet,**
**dass** das Fahrzeug (18) ferner einen optischen Überwachungssensor, insbesondere einen Laserscanner, aufweist, welcher Lichtwellen in die zu überwachende Umgebung des Fahrzeugs (18) emittiert und Lichtwellen detektiert, welche von dem gegebenenfalls in der Umgebung vorhandenen Objekt remittiert wurden,
**dass** zusätzliche Positionsdaten des Objekts auf der Grundlage der detektierten Lichtwellen ermittelt werden, und
**dass** das Ermitteln der Fahrzeugposition auf der Grundlage des Vergleichs von Positionsdaten von erfassten Objekten mit den in der topografischen Karte (30) abgespeicherten Positionsinformationen von Objekten umfasst, dass anstelle der oder zusätzlich zu den von dem Radarsensor (20) ermittelten Positionsdaten des erfassten Objekts die von dem optischen Überwachungssensor ermittelten zusätzlichen Positionsdaten dieses Objekts in dem Vergleich verwendet werden.

8. Verfahren nach einem der vorhergehenden Ansprüche,
**dadurch gekennzeichnet,**
**dass** der Radarsensor (20) und/oder der optische Überwachungssensor für eine Ermittlung des Abstands zu dem erfassten Objekt ausgelegt sind.

9. Verfahren nach einem der vorhergehenden Ansprüche,
**dadurch gekennzeichnet,**
**dass** der Radarsensor (20) ein Dauerstrichradarsensor (20), insbesondere ein modulierter Dauerstrichradarsensor (20) ist.

10. Verfahren nach einem der vorhergehenden Ansprüche,
**dadurch gekennzeichnet,**
**dass** die ermittelte Geschwindigkeit des Objekts eine Relativgeschwindigkeit des Objekts in Bezug auf das Fahrzeug (18) ist,
**dass** ferner die Eigengeschwindigkeit des Fahrzeugs (18) ermittelt wird, dass auf der Grundlage der Relativgeschwindigkeit und der Eigengeschwindigkeit eine Absolutgeschwindigkeit des Objekts ermittelt wird, und dass für das Feststellen, ob die Geschwindigkeit dieses Objekts einen vorgegebenen Schwellenwert nicht überschreitet, die Absolutgeschwindigkeit des Objekts betrachtet wird.
